# EUROPÄISCHE PATENTSCHRIFT

(11) **EP 0 921 286 B1**
(45) Veröffentlichungstag und Bekanntmachung des Hinweises auf die Patenterteilung: **13.11.2002**
(21) Anmeldenummer: 98122813.3
(22) Anmeldetag: 01.12.1998
(51) Int. Cl.: F02B 17/00, F02M 69/04

(54) **Direkteinspritzende Brennkraftmaschine**
Direct injection type internal combustion engine
Moteur à combustion interne du type à injection directe

(30) Priorität: 05.12.1997 DE 19753965
(43) Veröffentlichungstag der Anmeldung: 09.06.1999
(73) Patentinhaber: AUDI AG, 85045 Ingolstadt (DE)
(72) Erfinder: Bandel, Clemens, 85049 Ingolstadt (DE); Arndt, Michael, 52070 Aachen (DE)

(56) Entgegenhaltungen:
- DE-A- 1 911 177
- DE-A- 3 609 798
- DE-A- 3 928 579
- DE-A- 19 703 400
- US-A- 4 085 713
- US-A- 5 150 691
- US-A- 5 551 392

## Beschreibung

Die vorliegende Erfindung betrifft eine direkteinspritzende Brennkraftmaschine, die pro Zylinder wenigstens ein Einlaßventil, wenigstens einen Einlaßkanal, der das wenigstens eine Einlaßventil mit Frischluft versorgt, und ein Einspritzventil aufweist.

Bei PKW-Brennkraftmaschinen mit Direkteinspritzung in den Brennraum herrschen äußerst beengte Bauraumverhältnisse bei der Unterbringung der Gaswechselventile, Einspritzventile und Zündkerzen. Eine derartige Brennkraftmaschine ist beispielsweise aus der DE-OS 19 11 117 bekannt. Die Unterbringung dieser Komponenten wird außerdem durch die erforderlichen Gaswechselkanäle erschwert.

Vor diesem Hintergrund ist es Aufgabe der vorliegenden Erfindung, eine direkteinspritzende Brennkraftmaschine zu konzipieren, die insbesondere eine vorteilhafte Anordnung der Einspritzventile ermöglicht und die zudem kostengünstig herstellbar ist. Ferner soll die erfindungsgemäße Anordnung auch höchsten Anforderungen an den ausfallsicheren Betrieb sowie an die Produktsicherheit der direkteinspritzenden Brennkraftmaschine gerecht werden.

Gelöst wird diese Aufgabe, indem das Einspritzventil sich im wesentlichen innerhalb des Einlaßkanals erstreckt und zu dem wenigstens einen Einlaßventil benachbart angeordnet ist. Durch diese Merkmalskombination wird der benötigte Bauraum minimiert, da zwischen dem Einlaßkanal und dem Einspritzventil keine Trennwand mehr erforderlich ist. Der Entfall der Trennwand bedeutet gleichzeitig eine gewisse Vereinfachung des Zylinderkopfes der Brennkraftmaschine sowie eine Erleichterung der Montage des Einspritzventils und spart zudem Kosten. Darüber hinaus hat diese besondere Anordnung des Einspritzventils den Vorteil, daß das Einspritzventil mittels der den Einlaßkanal unter hoher Geschwindigkeit passierenden Ansaugluft wirkungsvoll gekühlt wird.

Vorteilhaft ist das Einspritzventil dabei zur Zylinderachse geneigt angeordnet. Denn diese Anordnung des Einspritzventils ist speziell bei gekrümmten Einlaßkanälen besonders strömungsgünstig.

Zur Versorgung des Einspritzventils mit Kraftstoff ist eine Verteilerleiste vorgesehen, welche zumindest teilweise in ein den Einlaßkanal verlängerndes Anschlußteil integriert ist. Dazu kann die Verteilerleiste entweder in einem Anschlußteil montiert sein oder aber mit einem Anschlußteil aus Kunststoff, Aluminium oder Magnesium einteilig ausgeführt sein. Das Anschlußteil kann zum Beispiel ein Saugrohr sein.

In einer besonderen Ausführungsform der Erfindung liegt ein zwischen dem Einspritzventil und der Verteilerleiste vorgesehenes Dichtungselement innerhalb des Einlaßkanals. Denn bei dieser Ausführungsform ist gewährleistet, daß der aufgrund des hohen Förderdruckes bei einer eventuell auftretenden Undichtigkeit zwischen dem Einspritzventil und der Verteilerleiste austretende Kraftstoff zusammen mit der durch den Einlaßkanal angesaugten Frischluft in den Zylinder der Brennkraftmaschine gelangt und dort verbrannt wird. Somit könnte der dennoch an der Verbindungsstelle zwischen dem Einspritzventil und der Verteilerleiste austretende Kraftstoff auf keinen Fall eine Brandgefahr darstellen.

Bevorzugt sind die Einlaßventile der Brennkraftmaschine ebenfalls zur Zylinderachse geneigt angeordnet. Dadurch sind günstige Geometrien des Einlaßkanals realisierbar, so daß das Einspritzventil problemlos im Einlaßkanal untergebracht werden kann.

Besonders bevorzugt sind dabei zwei Einlaßventile unter einem ersten Winkel Alpha zur Zylinderachse geneigt angeordnet und ist das Einspritzventil unter einem zweiten Winkel Beta zur Zylinderachse geneigt angeordnet. Dieses Merkmal erleichtert die strömungsgünstige Unterbringung des Einspritzventils im Einlaßkanal, obgleich auch ohne weiteres denkbar ist, daß der Einlaßkanal als ein zur Zylinderachse weitgehend parallel angeordneter Fallkanal ausgebildet ist und daß sich in dem Einlaßkanal eine zur Zylinderachse ebenfalls parallel angeordnete Einspritzdüse erstreckt.

In einer Weiterbildung der Erfindung ist darüber hinaus vorgesehen, daß die Einlaßventile über außermittig angeordnete Tassenstößel betätigt werden. Hierbei kann der Abstand der beiden Tassenstößel ungleich dem Ventilabstand sein, so daß sie dem Einspritzventil ausweichen und gleichzeitig ein größtmöglicher Durchmesser der Tassenstößel verwirklichbar ist.

Gemäß einer alternativen Weiterbildung der Erfindung können die Einlaßventile auch über Schlepphebel betätigt werden, wobei diese zum Beispiel als schaltbare Schlepphebel ausgebildet sein können.

Schließlich kann eine zur Ansteuerung der Einlaßventile vorgesehene Einlaßnockenwelle jeweils zwischen den beiden Einlaßventilen und oberhalb des Einspritzventils gelagert sein.

Die vorliegende Erfindung wird unter Bezugnahme auf die beiden nachfolgenden Zeichnungsfiguren näher erläutert. Es zeigen:
- Figur 1: einen Querschnitt der erfindungsgemäßen Brennkraftmaschine in schematischer Darstellung; und
- Figur 2: eine Draufsicht auf den Einlaßkanal aus Figur 1 in stark vereinfachter Darstellung.

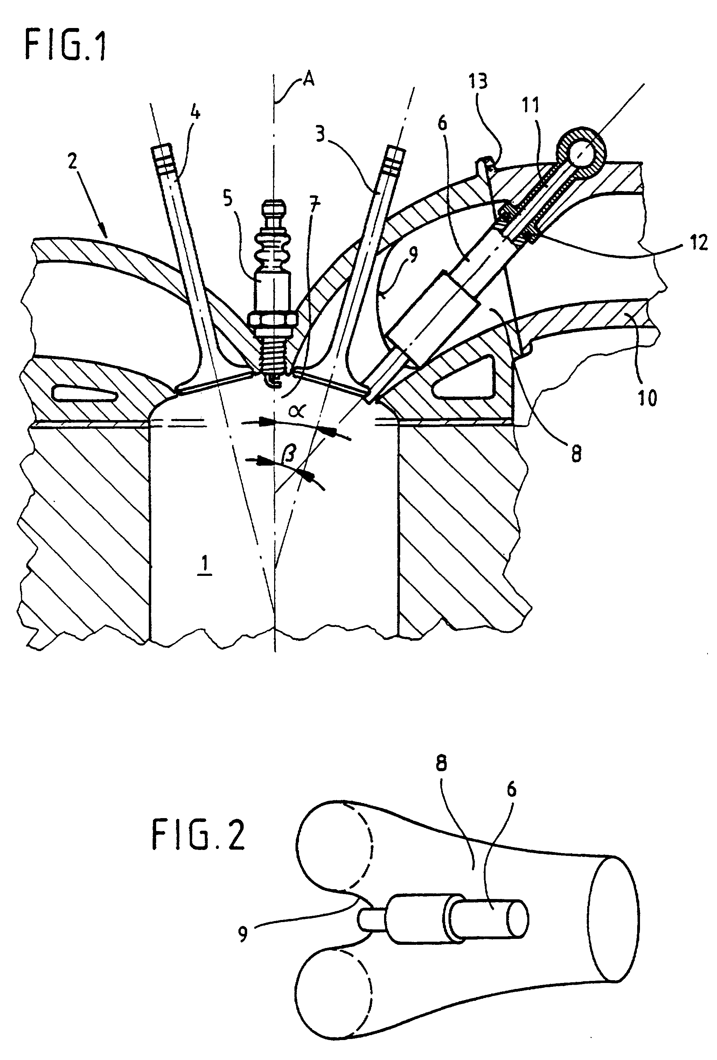

Eine direkteinspritzende Otto-Brennkraftmaschine aus Figur 1 weist wenigstens einen Zylinder 1 und im dazugehörigen Zylinderkopf 2 pro Zylinder 1 zwei Einlaßventile 3, zwei Auslaßventile 4, eine Zündkerze 5 und ein Einspritzventil 6 auf.

Der Zylinder 1 der Brennkraftmaschine ist symmetrisch ausgebildet und an seiner Stirnseite durch eine im wesentlichen dachförmige Brennraumkuppel 7 begrenzt. Die Achse des Zylinders 1 ist in Figur 1 mit dem Bezugszeichen A versehen.

Auf der Einlaßseite des Zylinderkopfes 2 sind die beiden zueinander parallelen Einlaßventile 3 unter einem ersten Winkel Alpha von ca. 15 Grad zur Zylinderachse A geneigt angeordnet. Die Einlaßventile 3 beherrschen einen gemeinsamen Einlaßkanal 8, der sich erst kurz vor den beiden Einlaßventilen 3 verzweigt. Die Verzweigungsstelle des Einlaßkanals 8 ist als symmetrischer Scheitel 9 ausgebildet.

Darüber hinaus sind für den Gaswechsel auf der Auslaßseite des Zylinderkopfes 2 zwei Auslaßventile 4 vorgesehen, die ebenfalls parallel zueinander und zur Achse A des Zylinders 1 geneigt angeordnet sind.

Außerdem weist die direkteinspritzende Brennkraftmaschine zur Fremdzündung eine Zündkerze 5 auf, welche in der Figur 1 zur Zylinderachse A koaxial angeordnet ist.

Zwischen den beiden Einlaßventilen 3 ist schließlich das unter hohem Druck arbeitende Einspritzventil 6 vorgesehen, welches unter einem zweiten Winkel Beta zur Zylinderachse A geneigt angeordnet ist, wobei der Winkel Beta mit ca. 45 Grad wesentlich größer ist als der Winkel Alpha mit ca. 15 Grad. Die Position des Einspritzventils 6 in der dachförmigen Brennraumkuppel 7 entspricht hier in etwa dem Platz, der einem mittigen Einlaßventil bei drei Einlaßventilen zukäme. Das Einspritzventil 6 erstreckt sich von der Brennraumkuppel 7 zum Scheitel 9 des Einlaßkanals 8 und vom Scheitel 9 aus in den offenen Einlaßkanal 8 hinein.

Die Verlängerung des im Zylinderkopf 2 befindlichen Einlaßkanals 8 wird von einem Anschlußteil 10 gebildet. Das Anschlußteil 10 besteht aus Kunststoff und trägt eine Verteilerleiste 11 aus Metall, die untrennbar mit dem Anschlußteil 10 verbunden ist. Die Verbindung der Verteilerleiste 11 mit dem Anschlußteil 10 erfolgt, indem die Verteilerleiste 11 bei der Fertigung des Anschlußteils 10 einfach eingespritzt bzw. umspritzt wird. Ebenso wäre jedoch auch eine in das Anschlußteil montierte Verteilerleiste denkbar.

Für eine dichtende Verbindung des Einspritzventils 6 und der Verteilerleiste 11, welche das Einspritzventil 6 mit Kraftstoff versorgt, ist ein Dichtungselement 12 vorgesehen, welches in Figur 1 als O-Ring ausgebildet ist. Die Verbindungsstelle mit dem Dichtungselement 12 ist dabei innerhalb des Einlaßkanals 8 angeordnet. Zur Montagevereinfachung ist das Dichtungselement 12 auf der Versorgungsseite des Einspritzventils 6 im Bereich des Einlaßflansches 13 angeordnet.

Selbstverständlich kann die vorliegende Erfindung auch bei einer direkteinspritzenden Brennkraftmaschine mit einem oder mit mehr als zwei Einlaßventilen und mit mehr als einem Einspritzventil pro Zylinder Anwendung finden.

## Patentansprüche

1. Direkteinspritzende Brennkraftmaschine, die pro Zylinder (1)
- wenigstens ein Einlaßventil (3),
- wenigstens einen Einlaßkanal (8), der das wenigstens eine Einlaßventil (3) mit Frischluft versorgt, und
- ein Einspritzventil (6), aufweist, das sich bis in die Brennraumkuppel (7) erstreckt,
**dadurch gekennzeichnet, daß** das Einspritzventil (6) sich im wesentlichen innerhalb des Einlaßkanals (8) erstreckt und zu dem wenigstens einen Einlaßventil (3) benachbart angeordnet ist.

2. Brennkraftmaschine nach Anspruch 1, **dadurch gekennzeichnet, daß** das Einspritzventil (6) zur Zylinderachse (A) geneigt angeordnet ist.

3. Brennkraftmaschine nach einem der Ansprüche 1 oder 2, **dadurch gekennzeichnet, daß** zur Versorgung des Einspritzventils (6) mit Kraftstoff eine Verteilerleiste (11) vorgesehen ist, welche zumindest teilweise in ein den Einlaßkanal (8) verlängerndes Anschlußteil (10) integriert ist.

4. Brennkraftmaschine nach Anspruch 3, **dadurch gekennzeichnet, daß** das Anschlußteil (10) ein Saugrohr ist.

5. Brennkraftmaschine nach einem der Ansprüche 3 oder 4, **dadurch gekennzeichnet, daß** ein zwischen dem Einspritzventil (6) und der Verteilerleiste (11) vorgesehenes Dichtungselement (12) innerhalb des Einlaßkanals (8) liegt.

6. Brennkraftmaschine nach einem der Ansprüche 1 bis 5, **dadurch gekennzeichnet, daß** das wenigstens eine Einlaßventil (3) zur Zylinderachse (A) geneigt angeordnet ist.

7. Brennkraftmaschine nach Anspruch 6, **dadurch gekennzeichnet, daß** das wenigstens eine Einlaßventil (3) unter einem ersten Winkel Alpha zur Zylinderachse (A) geneigt angeordnet ist und daß das Einspritzventil (6) unter einem zweiten Winkel Beta zur Zylinderachse (A) geneigt angeordnet ist.

8. Brennkraftmaschine nach einem der Ansprüche 1 bis 7, **dadurch gekennzeichnet, daß** das wenigstens eine Einlaßventil (3) über außermittig angeordnete Tassenstößel betätigt wird.

9. Brennkraftmaschine nach einem der Ansprüche 1 bis 8, **dadurch gekennzeichnet, daß** das wenigstens eine Einlaßventil (3) über Schlepphebel betätigt wird.

10. Brennkraftmaschine nach einem der Ansprüche 1 bis 9, **dadurch gekennzeichnet, daß** zur Ansteuerung der Einlaßventile (3) eine Einlaßnockenwelle vorgesehen ist, die zwischen den Einlaßventilen (3) und oberhalb des Einspritzventils (6) gelagert ist.

## Claims

1. Direct injection type internal combustion engine, comprising per cylinder (1)
- not less than one intake valve (3),
- not less than one intake port (8), which supplies fresh air to the not less than one intake valve (3), and
- an injection valve (6), which extends right into the dome (7) of the combustion chamber,
**characterised in that** the injection valve (6) extends substantially inside the intake port (8) and is set alongside the not less than one intake valve (3).

2. Internal combustion engine according to claim 1, **characterised in that** the injection valve (6) is set inclined at an angle to the cylinder axis (A).

3. Internal combustion engine according to either of claims 1 and 2, **characterised in that** a distributor strip (11) is provided for supplying fuel to the injection valve (6), said strip (11) being at least partly integrated into a connecting piece (10) which extends the length of the intake port (8).

4. Internal combustion engine according to claim 3, **characterised in that** the connecting piece (10) is an intake pipe.

5. Internal combustion engine according to either of claims 3 and 4, **characterised in that** a sealing element (12) between the injection valve (6) and the distributor strip (11) is situated inside the intake port (8).

6. Internal combustion engine according to any of claims 1 to 5, **characterised in that** the not less than one intake valve (3) is set inclined at an angle to the cylinder axis (A).

7. Internal combustion engine according to claim 6, **characterised in that** the not less than one intake valve (3) is set inclined at a first angle alpha to the cylinder axis (A) and that the injection valve (6) is set inclined at a second angle beta to the cylinder axis (A).

8. Internal combustion engine according to any of claims 1 to 7, **characterised in that** the not less than one injection valve (3) is actuated via bucket tappets set off-centre.

9. Internal combustion engine according to any of claims 1 to 8, **characterised in that** the not less than one injection valve (3) is actuated via valve levers.

10. Internal combustion engine according to any of claims 1 to 9, **characterised in that** for operating the intake valves (3) an intake camshaft is provided which is mounted between the intake valves (3) and above the injection valve (6).

## Revendications

1. Moteur à combustion interne à injection directe, présentant, par cylindre (1)
- au moins une soupape d'admission (3),
- au moins un canal d'admission (8) qui alimente en air neuf au moins une soupape d'admission (3), et
- un injecteur (6), qui s'étend jusqu'à l'intérieur de la coupelle de chambre de combustion (7),
**caractérisé en ce que** l'injecteur (6) s'étend sensiblement à l'intérieur du canal d'admission (8) et est disposé au voisinage de la au moins une soupape d'admission (3).

2. Moteur à combustion interne selon la revendication 1, **caractérisé en ce que** l'injecteur (6) est incliné par rapport à l'axe de (A) du cylindre.

3. Moteur à combustion interne selon l'une des revendications 1 ou 2, **caractérisé en ce que** pour alimenter l'injecteur (6) en carburant est prévue une rampe de distribution (11) intégrée au moins partiellement dans une partie de raccordement (10) se prolongeant dans le canal d'admission (8).

4. Moteur à combustion interne selon la revendication 3, **caractérisé en ce que** la partie de raccordement (10) est un tube d'aspiration.

5. Moteur à combustion interne selon l'une des revendications 3 ou 4, **caractérisé en ce qu'**un élément d'étanchéité (12), prévu entre l'injecteur (6) et la rampe de distribution (11), est prévu à l'intérieur du canal d'admission (8).

6. Moteur à combustion interne selon l'une des revendications 1 à 5, **caractérisé en ce que** la au moins une soupape d'admission (3) est inclinée par rapport à l'axe (A) du cylindre.

7. Moteur à combustion interne selon la revendication 6, caractérisé la au moins une soupape d'admission (3) est inclinée sous un premier angle alpha par rapport à l'axe (A) du cylindre et en ce que l'injecteur (6) est incliné sous un deuxième angle bêta par rapport à l'axe (A) du cylindre.

8. Moteur à combustion interne selon l'une des revendications 1 à 7, **caractérisé en ce que** la au moins une soupape d'admission (3) est actionnée par l'intermédiaire d'un poussoir à coupelle disposé de façon excentrée.

9. Moteur à combustion interne selon l'une des revendications 1 à 8, **caractérisé en ce que** la au moins une soupape d'admission (3) est actionnée par un levier oscillant.

10. Moteur à combustion interne selon l'une des revendications 1 à 9, **caractérisé en ce que**, pour commander les soupapes d'admission (3), est prévu un arbre à cames d'admission monté entre les soupapes d'admission (3) et au-dessus de l'injecteur (6).
